# EUROPÄISCHE PATENTANMELDUNG

(11) **EP 1 911 618 A2**
(43) Veröffentlichungstag der Anmeldung: **16.04.2008**
(21) Anmeldenummer: 07019405.5
(22) Anmeldetag: 04.10.2007
(51) Int. Cl.: B60J 1/20

(54) **Wellenanordnung**

(30) Priorität: 12.10.2006 DE 102006050225
(71) Anmelder: BOS GmbH & Co. KG, 73760 Ostfildern (DE)
(72) Erfinder: Hansen, Melf, 75053 Gondelsheim (DE)
(74) Vertreter: Patentanwälte Ruff, Wilhelm, Beier, Dauster & Partner

(57) **Zusammenfassung**

Wellenanordnung, vorzugsweise für die Verwendung bei einer Rolloanordnung in einem Fahrzeug, mit einer um eine erste Achse (2) drehbar gelagerten Funktionswelle (10) und einer um eine zur ersten Achse (2) parallele und von dieser beanstandete zweite Achse (6) drehbar gelagerte Bremswelle (30) zur Erzeugung eines Bremsmoments, das in eine der Rotationsrichtung der Funktionswelle entgegengesetzte Richtung wirkt und eine Kupplung (16, 20, 26, 36) zur Momentenübertragung zwischen der Bremswelle (30) und der Funktionswelle (10).

Erfindungsgemäß ist die Kupplung (16, 20, 26, 36) als Schaltkupplung ausgebildet, mittels derer die Bremswelle (30) von der Funktionswelle (10) entkoppelbar ist.

Verwendung insbesondere für Fahrzeugrollos wie Kofferraumabdeckungen und Sonnenrollos.

## Beschreibung

Die Erfindung betrifft eine Wellenanordnung, vorzugsweise für die Verwendung bei einer Rolloanordnung eines Fahrzeug, mit einer um eine erste Achse drehbar gelagerten Funktionswelle, die vorzugsweise als zur Aufnahme eines abwickelbaren textilen Flächengebildes vorgesehene Wickelwelle ausgebildet ist, und einer um eine zur ersten Achse parallele und von dieser beanstandete zweite Achse drehbar gelagerten Bremswelle zur Erzeugung eines Bremsmoments, dass in eine der Rotationsrichtung der Funktionswelle entgegengesetzte Richtung wirkt und eine Kupplung zur Momentübertragung zwischen der Bremswelle und der Funktionswelle.

Eine Rolloanordnung mit gattungsgemäßer Wellenanordnung ist aus der DE 10 2004 042 121 A1 bekannt. Bei dieser sind eine Rollowelle und eine Nebenwelle parallel zueinander angeordnet und mittels eines Riementriebs wirkgekoppelt. Die Nebenachse weist eine Bremsfeder auf, die dafür Sorge trägt, dass eine Aufwickelbewegung eines Rollotuchs gedämpft wird.

Aus der EP 12 230 81 A1 ist eine Rolloanordnung bekannt, bei der ein Rotor in eine Wickelwelle eingeschoben wird und mit dadurch dieser drehfest verbunden wird. Innerhalb des Rotors ist koaxial ein Stator vorgesehen, der gemeinsam mit dem Rotor einen dazwischenliegenden Ringraum begrenzt, in den eine Reibungsflüssigkeit eingefüllt ist. Bei einer Bewegung der Wickelwelle führt diese Reibungsflüssigkeit zu einer Bremswirkung des Rotors gegenüber dem Stator.

Aus der DE 69 801 25 C2 ist eine aufrollbare Bildwand bekannt, bei der ein mittels einer Schaltkupplung ein- und ausrückbarer Rotor innerhalb eines Winderohrs 16 vorgesehen ist. Dieser Rotor dreht im Betrieb einem koaxial angeordneten Stator gegenüber, wobei in einem Zwischenraum zwischen Rotor und Stator eine Bremsflüssigkeit vorgesehen ist, die die Bewegung des Rotors und des Winderohrs bremst. Die Kupplung gestattet es, diese Bremswirkung nur bei einer der beiden möglichen Drehrichtungen des Winderohrs zu aktivieren.

Aus der EP 0531730 B1 ist eine Sonnenschutzblende bekannt, die auf einer Wickelwelle aufgerollt ist. Am axialen Ende dieser Wickelwelle ist eine Bremsvorrichtung vorgesehen, die beim Ausziehen bzw. Einziehen der Sonnenblende die Drehbewegung der Wickelwelle dämpft.

Aus der DE 102 07 704 A1 ist eine Vorrichtung zum Aufrollen eines folienartigen Elements beschrieben, bei dem die Drehbewegung einer Aufrollwelle mittels einer Viskosebremse gebremst wird, die je nach Drehrichtung der Aufrollwelle durch eine Axialkupplung ein- und ausgekoppelt werden kann.

Als nachteilig am Stand der Technik wird angesehen, dass die schaltbaren Kupplungsmechanismen eine relativ hohe Komplexität aufweisen und wegen des erforderlichen Platzbedarfs nicht flexibel einzusetzen sind.

### Aufgabe und Lösung

Aufgabe der Erfindung ist es, eine gattungsgemäße Wellenanordnung in Hinblick auf Wirtschaftlichkeit und/oder Flexibilität weiterzubilden.

Erfindungsgemäß wird hierzu die Kupplung als Schaltkupplung ausgebildet, mittels derer die Bremswelle von der Funktionswelle entkoppelbar ist.

Erfindungsgemäß ist vorgesehen, die Kupplung, die der Momentübertragung zwischen Funktionswelle und Bremswelle dient, zur Entkoppelung der Bremswelle von der Funktionswelle zu nutzen. Dies erlaubt es in besonders einfacher Art und Weise, die Bremswirkung des Bremsmoments nur fallweise eintreten zu lassen, insbesondere nur bei einer bestimmten Drehrichtung der Funktionswelle. Die Funktionswelle wird bestimmungsgemäß mit einer beweglichen Einrichtung gekoppelt, bei der die fallweise Bremswirkung wünschenswert ist. Bei einer solchen beweglichen Einrichtung handelt es sich insbesondere um eine schwenk- oder drehbeweglich Einrichtung wie beispielsweise ein ausklappbarer Aschenbecher, ein ausklappbares Staufach, eine Sonnenschutzblende oder eine Rolloanordnung. Die bewegliche Einrichtung kann jedoch auch eine translatorisch bewegliche Einrichtung wie ein ausziehbarer Aschenbecher oder ein ausziehbares Staufach sein. Im Falle einer translatorisch beweglichen Einrichtung ist an der Einrichtung vorzugsweise eine Zahnstange vorgesehen, die mit einem mit der Funktionswelle drehfest verbundenen Zahnrad zusammenwirkt. Das Bremsmoment der Bremswelle wird im Falle der Kopplung auf die Funktionswelle und damit auf die bewegliche Einrichtung übertragen und wirkt dort der Drehrichtung der Funktionswelle und damit auch der Dreh-, Schwenk- oder Linearbewegung der beweglichen Einrichtung entgegen. Durch die fallweise aktivierte Kopplung kann bezüglich der beweglichen Einrichtung erreicht werden, dass während einer manuellen Bewegung in eine erste Richtung kein Bremsmoment durch die Bremswelle an die Funktionswelle und damit die bewegliche Vorrichtung übertragen wird, während bei einem automatischen, beispielsweise federenergiegespeisten Rückweg in die Ausgangslage die Rückbewegung durch das von der angekoppelten Bremswelle erzeugte Bremsmoment verzögert wird, so dass die Rückbewegung bezüglich ihrer Geschwindigkeit begrenzt ist. Im Falle einer Rolloanordnung kann durch die fallweise aktivierte Kopplung die als Rollowelle ausgebildete Funktionswelle beim manuellen Ausziehen des textilen Flächengebildes ungebremst bleiben und bei einem federenergiegespeisten Rückholen des Flächengebildes gebremst werden.

Die Kupplung weist dabei vorzugsweise eine Zahngetriebe auf, was zum einen eine besonders flexible Anwendung einer erfindungsgemäßen Wellenanordnung erlaubt, da durch die Verwendung verschiedener Zahnradkombinationen eine Anpassung der Bremswirkung ein und derselben Bremsvorrichtung an verschiedene Anwendungsfelder möglich wird, und was zum anderen die Schaltbarkeit der Kupplung mittels eines einfachen Ausrückens der Zahnräder aus einer Eingriffslage gestattet. Da die Kupplung in axiale Richtung nur wenig Platz braucht, kann eine solche Wellenanordnung mit nur geringfügig die Breite der Funktionswelle übersteigender Breite ausgebildet sein. Im Falle einer Rolloanordnung mit erfindungsgemäßer Wellenanordnung kann diese so ausgebildet sein, dass sie nur unwesentlich breiter als die als Wickelwelle ausgebildete Funktionswelle ist. Die Bremswelle selbst kann kurz gestaltet sein. Insbesondere fällt unter den Begriff der Bremswelle auch ein Zahnrad, welches unmittelbar Teil einer Bremsvorrichtung, beispielsweise einer Viskosebremse, ist, ohne dass noch eine separate und mit dem Zahnrad verbundene Bremswelle erforderlich ist.

Bei einer Weiterbildung der Erfindung ist die Kupplung als selbstschaltende Kupplung ausgebildet, die in Abhängigkeit der Drehrichtung der Funktionswelle schaltet.

Hierdurch wird das Ziel erreicht, dass die Bremswelle nur bei einer bestimmten Drehrichtung der Funktionswelle mit dieser wirkverbunden ist. Dies ist in Hinblick auf bewegliche Einrichtungen von Vorteil, bei denen ein manuelles Ausziehen oder Ausschwenken zweckmäßigerweise ungebremst und ein automatisches Einziehen oder Zurückschwenken zweckmäßigerweise gebremst erfolgt.

Bei einer Weiterbildung der Erfindung weist die Kupplung ein um die erste Achse drehbares und mit der Funktionswelle drehfest verbundenes erstes Zahnrad, ein um die zweite Achse drehbares und mit der Bremswelle drehfest verbundenes zweites Zahnrad und ein um eine dritte Achse drehbares Verbindungszahnrad auf, wobei die dritte Achse zu der ersten Achse und der zweiten Achse parallel angeordnet ist und von diesen beanstandet ist und das Verbindungszahnrad zwischen einer Eingriffsposition und einer ausgerückten Position umschaltbar ausgebildet ist.

Bei einer solchen Wellenanordnung wird die Wirkkoppelung zwischen der Funktionswelle und der Bremswelle demnach über drei Zahnräder realisiert, wobei jeweils ein Zahnrad der Funktionswelle und der Bremswelle zugeordnet ist. Die beiden Zahnräder sind über das Verbindungszahnrad wirkverbindbar. In der Eingriffsposition ist das Verbindungszahnrad mit dem ersten und dem zweiten Zahnrad im Eingriff, so dass eine Momentenübertragung vom ersten Zahnrad auf das zweite Zahnrad mittels des Verbindungszahnrades erfolgen kann. In der ausgerückten Position ist das Verbindungszahnrad mit dem ersten Zahnrad und/oder mit dem zweiten Zahnrad nicht im Eingriff. Eine Momentenübertragung kann dann nicht stattfinden. Das Ausrücken des Verbindungszahnrades kann beispielsweise durch eine axiale Verschiebung des Verbindungszahnrades realisiert werden.

Bei einer darauf aufbauenden Weiterbildung ist die dritte Achse zwischen einer ersten Achslage, in der das Verbindungszahnrad mit dem ersten Zahnrad und dem zweiten Zahnrad im Eingriff ist, und einer zweiten Achslage, in der das Verbindungszahnrad mit dem ersten und/oder dem zweiten Zahnrad nicht in Eingriff ist, umschaltbar.

Die umschaltbare Position des Verbindungszahnrades wird bei dieser Weiterbildung über eine Parallelverschiebung der dritten Achse und eine damit verbundene Versetzung des Verbindungszahnrades ermöglicht. Dabei ist es besonders vorteilhaft, wenn die Achslage des Verbindungszahnrades unmittelbar durch die Drehrichtung der Funktionswelle beeinflusst wird, so dass eine Rotation der Funktionswelle in einer zu bremsenden Richtung das Verbindungszahnrad automatisch in Eingriff bringt und eine Rotation der Funktionswelle entgegen der zu bremsenden Richtung das Verbindungszahnrad automatisch aus dem Eingriff ausrückt. Die Änderbarkeit der Achslage kann beispielsweise über einen verfahrbaren Schlitten realisiert werden, an dem das Verbindungszahnrad drehbeweglich gelagert ist.

Bei einer Weiterbildung der Erfindung ist das Verbindungszahnrad achslagenunabhängig stets im Eingriff mit dem ersten Zahnrad.

Bei einer solchen Wellenanordnung kann die Drehung des ersten Zahnrades in Folge der Drehung der Funktionswelle unmittelbar genutzt werden, um das Verbindungszahnrad zwischen der ersten Achslage und der zweiten Achslage hin und her zu bewegen. Hierbei ist es wichtig, dass das für Änderung der Achslage erforderliche Moment geringer ist, als das Moment, das erforderlich ist, um das Verbindungszahnrad zu drehen. Dies kann insbesondere durch ein geeignetes Übersetzungsverhältnis zwischen dem ersten Zahnrad und dem Verbindungszahnrad erreicht werden. Als besonders vorteilhaft werden Zahnzahlverhältnisse zwischen 3 zu 1 und 3 zu 2 angesehen.

In einer Weiterbildung der Erfindung ist das Verbindungszahnrad an einem schwenkbaren Träger gelagert, wobei der Träger vorzugsweise um die erste Achse schwenkbar ausgebildet ist.

Eine solche Ausführungsform ist besonders vorteilhaft, da die Änderung der Achslage der dritten Achse auf diese Weise sehr einfach und platzsparend zu realisieren ist. Der Träger ist dabei um die erste Achse schwenkbar ausgebildet, so dass keine für ihn separat vorgesehene Achse oder eine anderweitige Bewegungsmöglichkeit der dritten Achse erforderlich ist. Durch den schwenkbaren Träger, der eine feste Distanz zwischen der ersten und der dritten Achse definiert, wird darüber hinaus erreicht, dass das Verbindungszahnrad ständig im Eingriff mit dem ersten Zahnrad verbleibt.

### Kurzbeschreibung der Zeichnungen

Weitere Vorteile und Merkmale der Erfindung ergeben sich aus den Ansprüchen sowie der nachfolgenden Beschreibung eines bevorzugten Ausführungsbeispiels der Erfindung, dass anhand der Zeichnungen dargestellt ist. Dabei zeigt:
- Figur 1: einen Teil einer erfindungsgemäßen Wellenanordnung, die Teil einer Rolloanordnung ist, mit einer Schaltkupplung im entkoppelten Zustand und
- Figur 2: die Wellenanordnung der Figur 1 mit der Schaltkupplung in einem eingekoppelten Zustand.

### Detaillierte Beschreibung der Ausführungsbeispiele

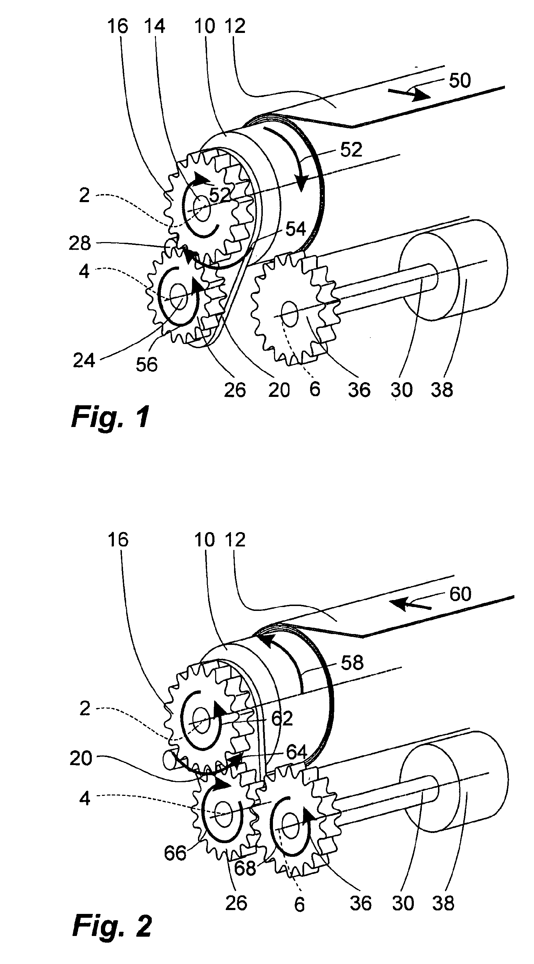

Die Figuren 1 und 2 zeigen eine erfindungsgemäße Wellenanordnung als Teil einer Rolloanordnung. Diese Wellenanordnung weist eine als Wickelwelle 10 ausgebildete Funktionswelle 10 auf, auf der ein textiles Flächengebilde 12 aufgerollt ist. Die Wickelwelle 10 ist um eine erste Achse 2 mittels einer nicht dargestellten Lagerung drehbar ausgebildet. An einem axialen Ende der Wickelwelle 10 schließt sich ein mit ihr drehfest verbundener Anschlusszapfen 14 an, der mit einem ersten Zahnrad 16 mittels einer Presspassung drehfest verbunden ist. Zwischen dem axialen Ende der Wickelwelle 10 und dem ersten Zahnrad 16 ist ein Träger 20 auf den Lagerzapfen 14 aufgesteckt, der gegenüber der Wickelwelle 10 und dem ersten Zahnrad 16 frei um die ersten Achse 2 verdrehbar ist.

Parallel zur Wickelwelle 10 ist eine Bremswelle 30 vorgesehen, die durch eine ebenfalls nicht dargestellte Lagerung drehbar um eine zweite Achse 6 gelagert ist. Die Bremswelle 30 ist mit einem ersten axialen Ende mit einem zweiten Zahnrad 36 drehfest verbunden. Am gegenüberliegenden Ende der Bremswelle 30 ist eine nicht näher dargestellte Bremsvorrichtung 38 vorgesehen, mittels derer eine Drehbewegung der Bremswelle 30 gebremst werden kann. Bei der Bremsvorrichtung 38 kann es sich insbesondere um eine Viskosebremse handeln.

Auf dem oben schon beschriebenen Träger 20 ist eine Zwischenwelle 24 vorgesehen, die relativ zum Träger 20 um eine dritte Achse 4 drehbeweglich gelagert ist, wobei die dritte Achse zu den Achsen 2, 6 parallel ausgerichtet ist. Mit der Zwischenwelle 24 ist ein Verbindungszahnrad 26 drehfest verbunden. Die erste Achse 2 und die dritte Achse 6 sind über den Träger 20 derart voneinander beanstandet, dass das erste Zahnrad 16 und das Verbindungszahnrad 26 stets im Eingriff miteinander sind.

Figur 1 zeigt den Zustand der Rolloanordnung beim manuellen Abziehen des textilen Flächengebildes 12 von der Wickelwelle 10. Das Abziehen erfolgt in eine Abziehrichtung 50. Es hat zur Folge, dass die Wickelwelle 10 um die ersten Achse 2 in Richtung des Pfeils 52 gedreht wird. Mit der Wickelwelle 10 zusammen dreht sich auch das erste Zahnrad 16 in Richtung 52. Diese Drehbewegung des Zahnrads 16 führt aufgrund der Tatsache, dass das Widerstandsmoment bzgl. einer Drehung des Verbindungszahnrades 26 gegenüber dem Träger 20 größer ist als das Widerstandsmoment bzgl. einer Drehung des Trägers 20 um die erste Achse 2, dazu, dass der Träger 20 um die erste Achse 2 in Richtung 54 verdreht wird, bis er an einen Anschlag 28 stößt, der eine weitere Drehbewegung des Trägers 20 verhindert. Das vom ersten Zahnrad 16 ausgeübte Drehmoment wird nach Erreichen dieses in Figur 1 dargestellten Zustandes durch das Verbindungszahnrad 26 aufgenommen, welches sich in Folge dessen in Richtung 56 dreht. Da in diesem Zustand weder das erste Zahnrad 16 noch das Verbindungszahnrad 26 im Eingriff mit dem zweiten Zahnrad 36 sind, ist die Bremswelle 30 in diesem Zustand von der Wickelwelle 10 entkoppelt und kann somit keine Bremswirkung entfalten. Der Abwickelvorgang, der in der Regel durch das Aufbringen manueller Kraft bewerkstelligt wird, muss somit nicht gegen die Bremswirkung der Bremsvorrichtung 38 durchgeführt werden.

Figur 2 zeigt den in Figur 1 dargestellten Teil der Rolloanordnung während des Einziehens des textilen Flächengebildes 12. Das dafür erforderliche Drehmoment in Richtung des Pfeils 58 wird durch eine nicht dargestellte Torsionsfeder erzeugt, die beispielsweise innerhalb der Wickelwelle 10 angeordnet sein kann. Dieses Drehmoment in Richtung des Pfeils 58 wirkt auf die Wickelwelle 10 und führt dazu, dass das textile Flächengebilde in Richtung 60 eingezogen und auf der Wickelwelle 10 aufgerollt wird. Gleichzeitig führt das Drehmoment 58 zu einer Drehung des ersten Zahnrades 16 in Richtung 62. Diese Drehung des Zahnrades 16 führt dazu, dass der Träger 20 in Richtung des Pfeils 64 verschwenkt wird, da das Widerstandsmoment des Trägers 20 um die erste Achse 2 geringer ist als das Widerstandsmoment des Zahnrades 26 um die dritte Achse 4. Der Träger 20 wird solange verschwenkt, bis das Verbindungszahnrad 26 im Eingriff mit dem zweiten Zahnrad 36 ist.

Sobald dieser - in Figur 2 dargestellte - Zustand erreicht ist, beginnt sich das Verbindungszahnrad 26 in Richtung des Pfeils 66 zu drehen, was wiederum zu einer Drehung des Zahnrades 36 in Richtung des Pfeils 68 führt. Damit sind die Bremswelle 30 und die Bremsvorrichtung 38 wirkverbunden mit der Wickelwelle 10, so dass der federenergiegespeiste Einzug des Flächengebildes 12 permanent durch die Bremsvorrichtung 38 und das durch diese erzeugte Bremsmoment verzögert wird. Da das Bremsmoment, das durch die Bremsvorrichtung 38 erzeugt wird, von der Rotationsgeschwindigkeit der Wickelwelle 10 abhängt und mit steigender Rotationsgeschwindigkeit steigt, kommt es zu einer konstanten Einzugsgeschwindigkeit, bei der das von der nicht dargestellten Torsionsfeder aufgebrachte Einzugsmoment mit dem von der Bremsvorrichtung 38 erzeugten Bremsmoment in etwa übereinstimmt.

Die dargestellte Vorrichtung ist sehr klein realisierbar und bezüglich ihres Aufbaus sehr unaufwendig, so dass sie kostengünstig herzustellen ist. Insbesondere von Vorteil ist, dass die axiale Erstreckung der Kupplung gering ist, so dass die Wickelwelle 10 fast so breit wir die gesamte Rolloanordnung ausgebildet sein kann.

## Patentansprüche

1. Wellenanordnung, vorzugsweise für die Verwendung bei einer Rolloanordnung eines Fahrzeugs, mit
- einer um eine erste Achse (2) drehbar gelagerten Funktionswelle (10), die vorzugsweise als zur Aufnahme eines abwickelbaren textilen Flächengebildes (12) vorgesehene Wickelwelle (10) ausgebildet ist, und
- einer um eine zur ersten Achse (2) parallele und von dieser beanstandete zweite Achse (6) drehbar gelagerten Bremswelle (30) zur Erzeugung eines Bremsmoments, das in eine der Rotationsrichtung der Funktionswelle entgegengesetzte Richtung wirkt und
- eine Kupplung (16, 20, 26, 36) zur Momentübertragung zwischen der Bremswelle (30) und der Funktionswelle (10),
**dadurch gekennzeichnet, dass**
das die Kupplung (16, 20, 26, 36) als Schaltkupplung ausgebildet ist, mittels derer die Bremswelle (30) von der Funktionswelle (10) entkoppelbar ist.

2. Wellenanordnung nach Anspruch 1,
**dadurch gekennzeichnet, dass**
die Kupplung (16, 20, 26, 36) als selbstschaltende Kupplung ausgebildet ist, die in Abhängigkeit der Drehrichtung (52, 58) der Funktionswelle (10) schaltet.

3. Wellenanordnung nach einem der vorstehenden Ansprüche,
**dadurch gekennzeichnet, dass**
die Kupplung
- ein um die erste Achse (2) drehbares und mit der Funktionswelle (10) drehfest verbundenes erstes Zahnrad (16),
- ein um die zweite Achse (6) drehbares und mit der Bremswelle (30) drehfest verbundenes zweites Zahnrad (36) und
- ein um eine dritte Achse (4) drehbares Verbindungszahnrad (26)
aufweist, wobei
- die dritte Achse (4) zu der ersten Achse (2) und der zweiten Achse (6) parallel angeordnet ist und von diesen beabstandet ist und
- das Verbindungszahnrad (26) zwischen einer Eingriffsposition und einer ausgerückten Position umschaltbar ausgebildet ist.

4. Wellenanordnung nach Anspruch 3,
**dadurch gekennzeichnet, dass**
die dritte Achse (4) zwischen einer ersten Achslage, in der das Verbindungszahnrad (26) mit dem ersten Zahnrad (16) und dem zweiten Zahnrad (36) im Eingriff ist, und einer zweiten Achslage, in der das Verbindungszahnrad (26) mit dem ersten Zahnrad (16) und/oder dem zweiten Zahnrad (36) nicht im Eingriff ist, umschaltbar ist.

5. Wellenanordnung nach Anspruch 3 oder 4,
**dadurch gekennzeichnet, dass**
das Verbindungszahnrad (26) achslagenunabhängig stets im Eingriff mit dem ersten Zahnrad (16) ist.

6. Wellenanordnung nach Ansprüche 3 bis 5,
**dadurch gekennzeichnet, dass**
das Verbindungszahnrad (26) an einem schwenkbaren Träger (20) gelagert ist, wobei der Träger (20) vorzugsweise um die erste Achse (2) schwenkbar ausgebildet ist.
